(19) Europäisches Patentamt / European Patent Office / Office européen des brevets

(11) **EP 1 936 229 A1**

(12) **DEMANDE DE BREVET EUROPEEN**

(43) Date de publication:
**25.06.2008 Bulletin 2008/26**

(51) Int Cl.:
*F16D 65/847* (2006.01)

(21) Numéro de dépôt: **07301638.8**

(22) Date de dépôt: **06.12.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **21.12.2006 FR 0655833**

(71) Demandeur: **PEUGEOT CITROËN AUTOMOBILES SA**
**78140 Vélizy Villacoublay (FR)**

(72) Inventeur: **Bailleux, Francois**
**91400, SACLAY (FR)**

(54) **Système de frein à disque à refroidissement pour véhicule**

(57) - Le système de frein comprend un disque de frein (9), un étrier de frein (10) destiné à recevoir le liquide de frein sous pression et serrer le disque de frein (9) sur une roue (8) du véhicule pour ralentir sa rotation. Il comporte aussi un moyen de refroidissement du liquide de frein par projection d'eau sur l'étrier de frein (10), puis évaporation de cette dernière.
- Véhicules automobiles. Systèmes de freinage des véhicules automobiles. Systèmes de freins à disque.

Fig.1

EP 1 936 229 A1

**Description**

La présente invention concerne un système de frein à disque à refroidissement pour véhicule, en particulier pour véhicule automobile.

Le poids des véhicules automobiles a tendance à augmenter du fait, d'une part, des perfectionnements qui leur sont apportés pour mieux satisfaire les normes relatives aux chocs et à la pollution et, d'autre part, du fait de l'augmentation du nombre des équipements et accessoires embarqués.

Il en résulte que les moteurs des véhicules ont tendance à augmenter en puissance. Qu'il s'agisse du freinage ou du refroidissement du moteur, il faut tenir compte du fait que les énergies cinétiques en jeu sont de plus en plus importantes.

Le porte à faux du véhicule, c'est-à-dire le positionnement de toutes les pièces débordant de la zone délimitée par les essieux extrêmes, augmente sous la pression des normes de chocs et de « réparabilité », ce qui entraîne une réduction de la circulation d'air dans les roues et les passages de roue.

La température du liquide de frein sous pression (huile) dans les étriers de frein augmente, et il arrive qu'elle dépasse, dans certains cas, la température d'ébullition, ce qui a pour conséquence de perdre la totalité du freinage parce que la course du maître cylindre ne permet pas de compenser l'augmentation de l'absorption.

Pour réduire cette température, une solution consisterait à augmenter la taille des disques de frein et à ajouter des ailettes de refroidissement sur l'arrière des étriers de frein. Toutefois, de telles solutions conduiraient à augmenter encore la masse des véhicules, ce qui n'est pas souhaitable.

D'autres solutions sont connues de l'art antérieur.

Ainsi, la demande de brevet d'invention français n° 2 829 207 décrit un frein à disque de véhicule automobile, qui comprend un disque métallique, des organes de friction et des moyens de refroidissement. Le disque est entraîné en rotation avec une roue du véhicule. Les organes de friction sont sélectivement appliqués sur des pistes de friction et définies sur deux faces respectives opposées du disque. Les pistes de friction délimitent entre elles un volume cylindrique annulaire, radialement bordé par une surface cylindrique interne de rayon relativement petit et par une surface cylindrique externe de rayon relativement grand. Les moyens de refroidissement sont prévus pour mettre en contact avec le disque un liquide présentant une température d'ébullition inférieure à une température maximale de fonctionnement du disque. Les moyens de refroidissement comprennent une gorge creusée dans le disque à partir de la surface cylindrique interne et fermée par un fond et des parois étanches au liquide.

Un autre exemple est constitué par la demande de brevet d'invention français n° 2 796 024, qui décrit un dispositif de freinage de véhicule automobile, lequel comporte un frein à disque permettant de transformer l'énergie cinétique du véhicule en énergie thermique et d'évacuer l'énergie thermique issue de la conversion. Le dispositif comprend aussi des organes de refroidissement conçus pour pulvériser, en cas de freinage intense ou prolongé, un liquide de refroidissement sur le disque. Ces moyens de refroidissement comprennent un réservoir de liquide préexistant sur le véhicule et contenant un liquide déjà utilisé dans une première application, comme une application lave-glace, par exemple. Il est également connu des documents US 4 771 822 A et JP 63 266 229 A des freins à disque comprenant des moyens de refroidissement des disques de frein par pulvérisation de liquide.

De tels systèmes consistant à refroidir les disques par pulvérisation peuvent conduire à la dégradation du disque à cause des variations de température brutales ainsi qu'à l'oxydation des disques et donc à leur perte d'efficacité. L'invention ici présente ne se propose pas de refroidir les disques de frein, avec les risques présentés ci-dessus, mais de refroidir le liquide de frein.

De tels dispositifs de l'art antérieur reposent en outre sur des solutions techniques qui ajoutent des composants, comme par exemple une configuration particulière du disque de frein ou encore une pompe électrique d'alimentation en eau de refroidissement en eau.

Le but de la présente invention est de fournir un nouveau système de frein à disque à refroidissement pour véhicule, en particulier pour véhicule automobile, qui n'est d'incidence ni sur le dimensionnement du système de freinage dans son ensemble, ni sur le dimensionnement de l'un ou l'autre de ses composants, et qui, de façon générale, n'entraîne, directement ou indirectement, aucune augmentation de la masse du véhicule.

Un autre but de la présente invention est de fournir un tel système, qui soit de conception simple, de fabrication aisée, de fonctionnement sûr et fiable, qui soit robuste et économique.

Pour parvenir à ces buts, la présente invention propose un nouveau système de frein à disque à refroidissement pour véhicule, en particulier pour véhicule automobile, qui comprend un disque de frein, un étrier de frein destiné à recevoir le liquide de frein sous pression et serrer le disque de frein sur une roue du véhicule pour ralentir sa rotation, et un moyen de refroidissement du liquide de frein par projection d'eau - désignée aussi eau de refroidissement - sur l'étrier de frein, puis évaporation de cette dernière.

Selon un premier mode de réalisation de l'invention, l'eau de refroidissement provient de la condensation de l'humidité de l'air sur l'évaporateur du climatiseur du véhicule.

En variante, l'eau de refroidissement peut être de l'eau de pluie récupérée dans l'auvent de pare-brise du véhicule.

Selon le premier mode de réalisation évoqué ci-dessus, l'évaporateur du climatiseur est situé au dessus de l'étrier de frein, une canalisation amène l'eau de refroidissement provenant de la condensation de l'humidité de l'air sur l'évaporateur du climatiseur au voisinage de l'étrier de frein, l'orifice d'évacuation de ladite canalisation étant dirigé sur l'étrier de frein.

De préférence, ledit orifice d'évacuation est dirigé vers l'arrière de l'étrier de frein.

Selon un autre mode de réalisation, le moyen de refroidissement du liquide de frein comporte un réservoir de stockage de l'eau de refroidissement situé en dessus de l'étrier de frein.

Selon un autre mode de réalisation encore, l'eau de refroidissement provient du réservoir de lave-glace du véhicule.

Dans les différents modes de réalisation de l'invention, l'étrier de frein comporte, de préférence, dans sa partie en regard dudit orifice d'évacuation d'eau de refroidissement, une forme en cuvette de façon à garder ladite eau de refroidissement tant qu'elle n'est pas évaporée.

De manière préférentielle, il est prévu, au voisinage de l'orifice d'évacuation, un dispositif de clapet automatique qui libère la projection de l'eau de refroidissement sur l'étrier de frein lorsque la température au voisinage de l'étrier de frein est supérieure à une température de seuil prédéterminée.

La température de seuil prédéterminée peut être de l'ordre de 120°C, environ.

De préférence, le dispositif de clapet automatique comporte :

- une partie fixe, rigidement fixée à l'extrémité de la canalisation dirigée vers l'étrier de frein, et
- une partie déformable axialement, coaxiale à ladite partie fixe, qui comprend une partie qui se dilate axialement sous l'effet de la température, de façon à venir former un passage pour l'eau de refroidissement entre la partie fixe et la partie déformable axialement lorsque la température au voisinage du dispositif de clapet est supérieure à la température de seuil, et permettre ainsi la projection d'eau de refroidissement sur l'étrier de frein.

Selon un mode de réalisation particulier du dispositif de clapet automatique, la partie fixe est un embout, monté sur l'orifice d'évacuation, qui présente un conduit interne pour le passage de l'eau de refroidissement, et la partie déformable axialement est un manchon cylindrique creux, qui comporte une partie transversale avec un orifice axial plaqué contre l'embout et une partie longitudinale avec une partie qui se dilate sous l'effet de l'augmentation de la température, de façon à ouvrir l'orifice axial lorsque la température au voisinage du dispositif de clapet est supérieure à la température de seuil, et permettre ainsi la projection d'eau de refroidissement sur l'étrier de frein.

Selon un autre mode de réalisation particulier du dispositif de clapet automatique, la partie fixe est un manchon cylindrique creux, monté sur l'orifice d'évacuation, qui présente une partie transversale avec un orifice axial pour le passage de l'eau de refroidissement, et la partie déformable axialement est une soupape, qui traverse l'orifice axial, ladite soupape ayant une tête qui ferme l'orifice axial et une tige axiale comprenant une partie qui se dilate sous l'effet de l'augmentation de la température, de façon à ouvrir le passage de l'eau de refroidissement au travers de l'orifice axial lorsque la température au voisinage du dispositif de clapet est supérieure à la température de seuil, et permettre ainsi la projection d'eau de refroidissement sur l'étrier de frein.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :

- la figure 1 représente, de manière schématique, l'architecture du système de frein à disque à refroidissement, selon la présente invention,
- la figure 2 représente, de manière schématique, le principe du montage de roue avec frein à disque à refroidissement, selon la présente invention,
- la figure 3 représente, de manière schématique, le principe d'un premier exemple de dispositif de clapet automatique ouvrant l'arrivée d'eau de refroidissement lorsqu'une température de seuil prédéterminée est atteinte au voisinage de l'étrier à refroidir,
- la figure 4 représente, de manière schématique, une variante du dispositif de clapet automatique de la figure 3.

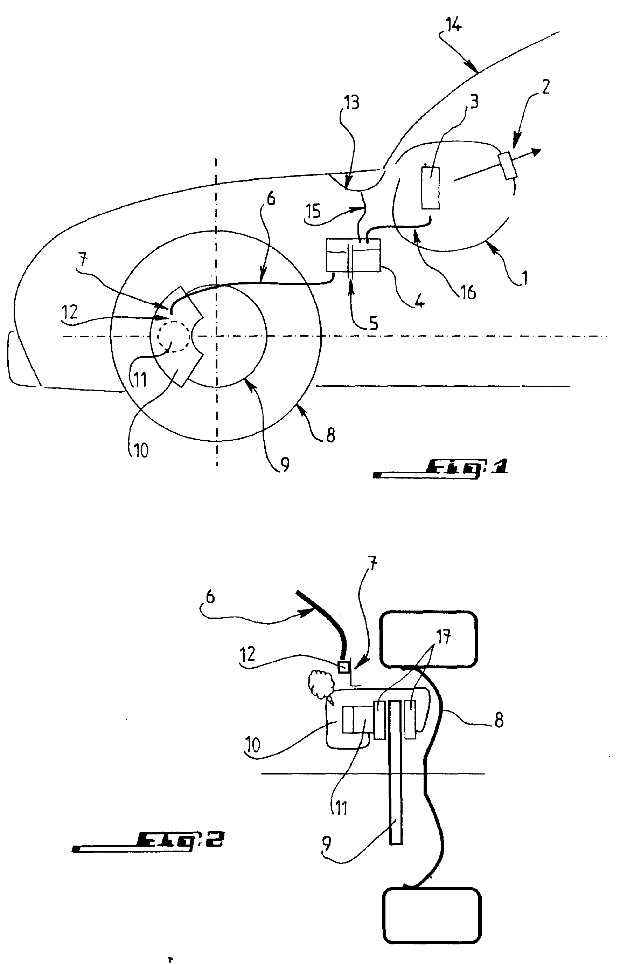

En référence aux dessins des figures 1 et 2, on a représenté, de manière schématique, l'architecture d'un système de frein à disque à refroidissement, selon la présente invention. Un frein à disque est un système de freinage qui utilise un disque, référencé 9 sur la figure 1, solidaire d'une roue 8 du véhicule automobile. Le disque 9 est serré par des plaquettes de frein 17, qui sont logées dans un étrier de frein 10. L'étrier de frein 10 est fixé au châssis du véhicule. Sous la pression hydraulique d'un liquide de frein, un piston 11 serre au moins une plaquette de frein sur le disque 9, ce qui ralentit la roue 8. L'étrier de frein peut être flottant lorsqu'il est muni d'un seul piston poussant sur une plaquette, l'autre plaquette restant bloquée dans l'étrier.

Un bon système de freinage doit pouvoir le plus possible transformer l'énergie cinétique en énergie thermique. Toutefois, lors d'une descente de montagne, par exemple, il y a un échauffement plus important du système de freinage qui a pour conséquence que les disques de frein peuvent atteindre des températures de plus de 600°C, l'huile étant alors à une température d'environ 100°C. Ensuite, dès l'arrêt du véhicule, la ventilation des disques de frein est stoppée et l'énergie des disques de frein se transfert vers l'huile du système de freinage, surtout derrière le piston de l'étrier de frein. La température de l'huile du système de freinage peut alors rapidement dépasser sa température d'ébullition, soit environ 160°C.

Il y a, dans ces conditions, nécessité de refroidir l'huile du système de freinage, en particulier celle contenue dans l'étrier de frein. Pour cela, selon le principe de la présente invention, on refroidit par projection d'eau l'étrier de frein 10, et cette eau de refroidissement est ensuite évaporée, de façon à réduire de façon optimale la température au voisinage de l'étrier de frein 10.

Selon un premier mode de réalisation de l'invention, il est prévu un réservoir 4, situé au dessus du système de freinage, en particulier au dessus de l'étrier de frein 10. Une canalisation 6 permet d'amener l'eau de refroidissement du réservoir 4 au dessus de l'étrier de frein 10, comme représenté sur la figure 1. Le réservoir 4 peut être équipé d'une sortie de trop-plein 5, de façon à limiter le volume d'eau dans le réservoir 4 à une quantité prédéterminée, de moins d'un litre, par exemple.

L'eau de refroidissement qui est stockée dans le réservoir 4 peut provenir de la condensation de l'humidité de l'air sur l'évaporateur 3 du climatiseur 1 (représenté seulement par un schéma et par sa sortie d'air 2) du véhicule. En variante ou de façon additionnelle, l'eau de refroidissement peut être de l'eau de pluie récupérée dans l'auvent 13 de pare-brise 14 du véhicule.

L'évaporateur 3 du climatiseur est situé au dessus du réservoir 4. La partie inférieure de l'évaporateur 3 est reliée au réservoir 4 par une canalisation 16. L'auvent 13 de pare-brise 14 est relié au réservoir 4 par une canalisation 15. Ainsi, les canalisations 15 et 16 alimentent le réservoir 4 en eau de refroidissement, laquelle eau de refroidissement est ensuite dirigée sur l'étrier de frein 10 par l'intermédiaire de la canalisation 6.

De préférence, l'étrier de frein 10 comporte, dans sa partie en regard de la sortie d'eau de la canalisation 6, une forme en cuvette (non représentée), de façon à garder l'eau tant qu'elle n'est pas évaporée.

On sait que la chaleur latente de l'eau présente un pouvoir calorifique très important : deux centimètres cubes d'eau peuvent permettre de refroidir 1 kilogramme d'acier d'une température de 100°C. D'où l'importance de la phase d'évaporation subséquente à la projection de l'eau.

Pour donner une illustration quantitative du principe de l'invention, on a évalué, comme suit, la quantité d'eau nécessaire pour abaisser de 50°C un étrier de frein en fonte de 1 kg, étant donné une capacité thermique de la fonte égale à 0,5 kJ/kg.K (l'unité est le kilo Joule par kilogramme Kelvin) et une chaleur latente de l'eau de 2200 kJ/kg :

- l'énergie E perdue dans ce refroidissement de 50°C est : E = 0,5 x 1 x 50 = 25 kilo Joules,
- il faut alors un volume d'eau V de

$$V = 25/2200 = 1 \text{ cm}^3$$

Si le rendement est de 50%, il faudra 2 cm$^3$ d'eau par étrier de frein.

Selon un autre mode de réalisation de l'invention, non représenté sur les figures, l'orifice d'évacuation de l'eau de condensation de l'évaporateur 3 peut être dirigé vers l'arrière de l'étrier de frein 10. L'eau arrive lors de l'arrêt du véhicule, parce qu'alors l'évaporateur 3 se réchauffe, et la surchauffe de l'étrier de frein 10 se produit également dans ces conditions.

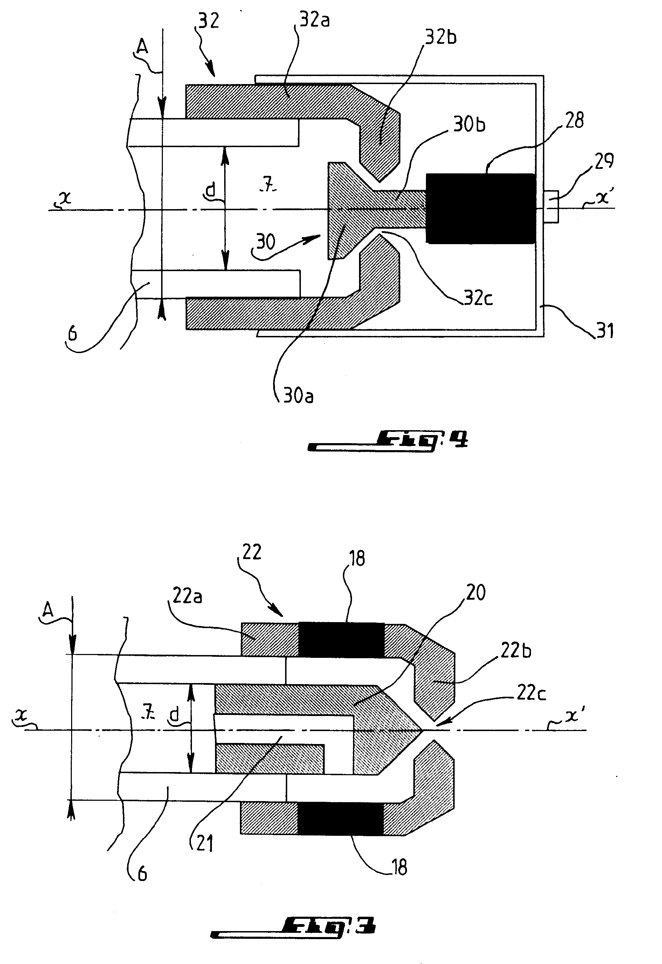

Pour améliorer les performances et la fiabilité du système de l'invention, il peut être prévu, selon une variante des modes de réalisation décrits précédemment, un dispositif de clapet automatique, de référence générale 12 sur les figures 1 et 2, placé à l'orifice d'évacuation 7, c'est-à-dire à l'extrémité de la canalisation 6 dirigée sur l'étrier de frein 10. Ce dispositif de clapet 12 a pour fonction de libérer la projection d'eau de refroidissement au voisinage de l'étrier de frein 10 lorsque la température T au voisinage de l'étrier de frein 10 dépasse une température de seuil $T_s$ prédéterminée, fixée à 120°C environ. Ce dispositif de clapet automatique 12 peut être, comme représenté sur les figures 3 et 4, un dispositif comportant un élément se dilatant en fonction de la température T au voisinage de l'étrier, et créant, par cette dilatation, un passage pour l'eau de refroidissement et, par conséquent, une projection de l'eau sur l'étrier de frein. Le dispositif de clapet automatique 12 ferme ce passage d'eau de refroidissement aussi longtemps que la température T au voisinage de l'étrier de frein 10 reste inférieure à la température de seuil $T_s$ prédéterminée.

La figure 3 représente, de manière schématique, le principe d'un premier exemple du dispositif de clapet automatique 12. L'orifice d'évacuation 7, situé à l'extrémité de la canalisation 6 dirigée vers l'étrier de frein 10, est fermé par un embout 20, monté sur le diamètre interne « d » de la canalisation 6 et traversé par un canal 21 débouchant transversalement à l'axe longitudinal xx' de la canalisation 6 et du dispositif de clapet 12. Un manchon cylindrique creux 22, monté sur le diamètre externe « A » de la canalisation 6, enferme l'extrémité de la canalisation 6 et l'embout 20. Le manchon cylindrique creux 22 comporte une partie longitudinale 22a et une partie transversale 22b. La partie transversale 22b présente un orifice axial 22c pour le passage de l'eau de refroidissement provenant de la canalisation 6 par l'intermédiaire du canal 21 de l'embout 20. La partie longitudinale 22a du manchon cylindrique creux 22 comporte une partie référencée 18, qui se dilate sous l'effet de l'augmentation de la température. Lorsque la température T au voisinage de l'étrier de frein 10, et par conséquent au voisinage du dispositif de clapet 12, reste inférieure à la température de seuil $T_s$ prédéterminée, la partie transversale 22b du manchon 22 vient se plaquer contre l'embout 20, obturer l'orifice 22c et empêcher, ainsi, la projection de l'eau de refroidissement sur l'étrier de frein 10. Lorsque la température T est supérieure à la température de seuil prédéterminée $T_s$, la partie transversale 22b du manchon 22 s'écarte de l'embout 20 et permet le passage de l'eau de refroidissement par l'orifice 22c, et par conséquent la projection de l'eau en provenance de la canalisation 6 sur l'étrier de frein 10.

La figure 4 est une variante de réalisation du dispositif de clapet automatique 12 de la figure 3. L'orifice d'évacuation 7, situé à l'extrémité de la canalisation 6 dirigée vers l'étrier de frein 10, est recouvert par un manchon cylindrique creux 32, monté sur le diamètre externe « A » de la canalisation 6. Le manchon cylindrique creux 32 comporte une partie longitudinale 32a, et une partie transversale 32b. La partie transversale 32b présente un orifice axial 32c pour le passage, dans certaines conditions, de l'eau de refroidissement provenant de la canalisation 6. L'orifice axial 32c est traversé par une pièce en forme de soupape, désignée soupape 30, qui s'étend selon l'axe xx' du dispositif 12. La soupape 30 comporte une tête de soupape 30a, et une tige de soupape 30b. La soupape 30 est immobilisée en translation selon la direction axiale xx' par l'extrémité de sa tige 30b, opposée à la tête 30a, qui est en butée contre un boîtier de fermeture fixe 31, monté sur le diamètre externe du manchon cylindrique creux 32. Un moyen de fixation 29, de type conventionnel, peut être prévu pour fixer l'extrémité de la tige 30b sur le boîtier 31. La tige 30b de la soupape 30 comporte une partie référencée 28, qui se dilate sous l'effet de l'augmentation de la température. Lorsque la température T au voisinage de l'étrier de frein 10, et par conséquent au voisinage du dispositif de clapet 12 reste inférieure à la température de seuil prédéterminée $T_s$, la soupape 30 vient se plaquer contre l'orifice axial 32c et empêcher la sortie de l'eau de refroidissement de la canalisation 6. Lorsque la température T est supérieure à la température de seuil prédéterminée $T_s$, la tête de soupape 30, sous l'effet de la dilatation de la partie 28, s'écarte de l'orifice axial 32c et permet le passage de l'eau de refroidissement de la canalisation 6 vers l'étrier de frein 10.

La présente invention, telle que décrite ci-dessus dans ses différents modes de réalisation, présente notamment l'avantage de ne pas recourir systématiquement à une augmentation d'une ou plusieurs dimensions du système de freinage, lorsqu'on augmente la puissance requise pour le véhicule. Dans cette situation, on évite d'augmenter, grâce à la présente invention, le diamètre et l'épaisseur du disque de frein, et par conséquent indirectement la masse du véhicule. On évite également de recourir à l'adjonction d'ailettes, par exemple, ce qui aurait pour conséquence d'augmenter aussi les dimensions du système de freinage, et indirectement la masse du véhicule.

Le système de freinage, selon la présente invention, présente un moyen simple, fiable, robuste et économique, de refroidissement du liquide de frein des étriers de frein, avec de l'eau obtenue provenant d'accessoires existants.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

**Revendications**

1. Système de frein à disque à refroidissement pour véhicule, en particulier pour véhicule automobile, comprenant un disque de frein (9), un étrier de frein (10) destiné à recevoir le liquide de frein sous pression et serrer le disque de frein (9) sur une roue (8) du véhicule pour ralentir sa rotation, **caractérisé en ce qu'**il comporte un moyen de refroidissement du liquide de frein par projection d'eau - désignée aussi eau de refroidissement - sur l'étrier de frein (10), puis évaporation de cette dernière.

2. Système selon la revendication 1, **caractérisé en ce que** l'eau de refroidissement provient de la condensation de l'humidité de l'air sur l'évaporateur (3) du climatiseur (1) du véhicule.

3. Système selon l'une quelconque des revendications 1 et 2, **caractérisé en ce que** l'eau de refroidissement est de l'eau de pluie récupérée dans l'auvent (13) de pare-brise (14) du véhicule.

4. Système selon la revendication 2, **caractérisé en ce que** l'évaporateur (3) du climatiseur (1) est situé au dessus de l'étrier de frein (10), **en ce qu'**une canalisation (6) amène l'eau de refroidissement provenant de la condensation de l'humidité de l'air sur l'évaporateur (3) du climatiseur (1) au voisinage de l'étrier de frein (10), l'orifice d'évacuation (7) de ladite canalisation (6) étant dirigé sur l'étrier de frein (10).

5. Système selon la revendication 4, **caractérisé en ce que** ledit orifice d'évacuation (7) est dirigé vers l'arrière de l'étrier de frein (10).

6. Système selon l'une quelconque des revendications 1 à 5, **caractérisé en ce que** le moyen de refroidissement du liquide de frein comporte un réservoir (4) de stockage de l'eau de refroidissement situé en dessus de l'étrier de frein (10).

7. Système selon la revendication 1, **caractérisé en ce que** l'eau de refroidissement provient du réservoir de lave-glace du véhicule.

8. Système selon l'une quelconque des revendications 1 à 7, **caractérisé en ce que** l'étrier de frein (10) comporte, dans sa partie en regard dudit orifice d'évacuation (7) d'eau de refroidissement, une forme en cuvette de façon à maintenir ladite eau de refroidissement tant qu'elle n'est pas évaporée.

**9.** Système selon l'une quelconque des revendications 1 à 8, **caractérisé en ce qu'**il est prévu, au voisinage dudit orifice d'évacuation (7), un dispositif de clapet automatique (12) qui libère la projection de l'eau de refroidissement sur l'étrier de frein (10) dans le cas seulement où la température (T) au voisinage de l'étrier de frein (10) est supérieure à une température de seuil ($T_s$) prédéterminée.

**10.** Système selon la revendication 9, **caractérisé en ce que** ladite température de seuil ($T_s$) prédéterminée est de l'ordre de 120°C.

**11.** Système selon l'une quelconque des revendications 9 et 10, **caractérisé en ce que** le dispositif de clapet automatique (12) comporte :

- une partie fixe (20; 32), rigidement fixée à l'extrémité de la canalisation (6) dirigée vers l'étrier de frein (10), et
- une partie déformable axialement (22; 30), coaxiale à ladite partie fixe (20 ; 32), qui comprend une partie qui se dilate axialement (18 ; 28) sous l'effet de la température, de façon à venir former un passage pour l'eau de refroidissement entre la partie fixe (20 ; 32) et la partie déformable axialement (22 ; 30) lorsque la température (T) au voisinage du dispositif de clapet (12) est supérieure à la température de seuil ($T_s$), et permettre ainsi la projection d'eau de refroidissement sur l'étrier de frein (10).

**12.** Système selon l'une quelconque des revendications 9 à 11, **caractérisé en ce que** ladite partie fixe est un embout (20), monté sur ledit orifice d'évacuation (7), qui présente un conduit interne (21) pour le passage de l'eau de refroidissement, et **en ce que** la partie déformable axialement est un manchon cylindrique creux (22), qui comporte une partie transversale (22b) avec un orifice axial (22c) plaqué contre l'embout (20) et une partie longitudinale (22a) avec une partie qui se dilate (18) sous l'effet de l'augmentation de la température, de façon à ouvrir ledit orifice axial (22c) lorsque la température (T) au voisinage du dispositif de clapet (12) est supérieure à la température de seuil ($T_s$), et permettre ainsi la projection d'eau de refroidissement sur l'étrier de frein (10).

**13.** Système selon l'une quelconque des revendications 9 à 11, **caractérisé en ce que** ladite partie fixe est un manchon cylindrique creux (32), monté sur ledit orifice d'évacuation (7), qui présente une partie transversale (32b) avec un orifice axial (32c) pour le passage de l'eau de refroidissement, et une soupape (30), qui traverse ledit orifice axial (32c), ladite soupape (30) ayant une tête (30a) qui ferme l'orifice axial (32c) et une tige axiale (30b) comprenant une partie qui se dilate (28) sous l'effet de la température, de façon à ouvrir le passage de l'eau de refroidissement au travers dudit orifice axial (32c) lorsque la température (T) au voisinage du dispositif de clapet (12) est supérieure à la température de seuil ($T_s$), et permettre ainsi la projection d'eau de refroidissement sur l'étrier de frein (10).

_Fig.1_

_Fig.2_

**Fig. 4**

**Fig. 3**

**Office européen des brevets**

## RAPPORT DE RECHERCHE EUROPEENNE

Numéro de la demande

EP 07 30 1638

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 4 771 822 A (BARBOSA RICARDO A [US]) 20 septembre 1988 (1988-09-20) * colonne 3, ligne 3 - ligne 41; figures 1,2 * | 1,6,8 | INV. F16D65/847 |
| Y | | 3,7,9,10 | |
| Y | DE 24 58 202 A1 (LANG INGEBORG) 10 juin 1976 (1976-06-10) * page 3 * | 3,7 | |
| Y | US 2 958 399 A (OSBORNE ALBERT H) 1 novembre 1960 (1960-11-01) * colonne 2, ligne 43 - colonne 3, ligne 31; figures 1,4,5 * | 9,10 | |
| X,D | JP 63 266229 A (NIPPON DENSO CO) 2 novembre 1988 (1988-11-02) * abrégé; figures 1,2,4,10 * | 1,6,8 | |

DOMAINES TECHNIQUES RECHERCHES (IPC)

F16D
B60H
B60S

Le présent rapport a été établi pour toutes les revendications

| Lieu de la recherche | Date d'achèvement de la recherche | Examinateur |
|---|---|---|
| Berlin | 17 mars 2008 | Topolski, Jan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1638

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2008

| Document brevet cité au rapport de recherche | | Date de publication | Membre(s) de la famille de brevet(s) | Date de publication |
|---|---|---|---|---|
| US 4771822 | A | 20-09-1988 | AUCUN | |
| DE 2458202 | A1 | 10-06-1976 | AUCUN | |
| US 2958399 | A | 01-11-1960 | AUCUN | |
| JP 63266229 | A | 02-11-1988 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2829207
- FR 2796024
- US 4771822 A
- JP 63266229 A